(19)

Europäisches
Patentamt
European
Patent Office
Office européen
des brevets

(11)     **EP 2 194 404 A1**

(12)     **EUROPEAN PATENT APPLICATION**

(43) Date of publication:
**09.06.2010 Bulletin 2010/23**

(51) Int Cl.:
**G02B 5/00** (2006.01)

(21) Application number: **08305879.2**

(22) Date of filing: **03.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicants:
• **Ecole Polytechnique
91120 Palaiseau Cédex (FR)**
• **Ecole Nationale Supérieure de Techniques
Avancées
75015 Paris (FR)**
• **Centre National de la Recherche Scientifique
(CNRS)
75016 Paris (FR)**

(72) Inventors:
• **Akturk, Selcuk
91120 Palaiseau (FR)**
• **Prade, Bernard
91120 Palaiseau (FR)**
• **Arnold, Cord
31515 Wunstorf (DE)**
• **Mysyrowicz, André
78000 Versailles (FR)**

(74) Representative: **Thinat, Michel
Cabinet Weinstein
56 A, rue du Faubourg Saint-Honoré
75008 Paris (FR)**

(54)     **Optical device comprising an axicon lens**

(57)     The invention concerns an optical device, comprising an axicon (1) with one of its terminal faces having a conical shape (11), and a second optical element axially aligned with the axicon (1), having a refractive index different from that of the axicon (1) and a surface complementary in shape to, and in contact with, the axicon (1) conical surface (11).

*Fig.3*

EP 2 194 404 A1

**Description**

The invention relates to optical devices. More specifically, the invention relates to an optical device comprising an axicon lens.

Applications of lasers commonly require focusing to increase the intensity of light and hence the efficiency of the process under use. When laser beams are focused with a lens, a focal spot is generated and the longitudinal length of the focal spot is directly proportional to its transverse size squared. Thus beams focused to smaller spot sizes stay intense over shorter distances. This is due to the property of light called diffraction, which results from its wave-like behaviour. Diffraction may cause limitations on applications. For nonlinear optical applications (where the frequency of the input light is altered), for example, the magnitude of the effect is governed by the length over which the light stays intense.

To overcome the limitation of diffraction, the idea of "diffraction-free beams", or non-diffracting beams, was presented. It has been shown that when the transverse electric field profile of the beam is in the form of zero-order Bessel function of the first kind, the light intensity stays unchanged during propagation. Such beams, called Bessel beams, consist of a central intense core and concentric rings, whose intensity follows the square of the zero-order Bessel function.

The virtues of non-diffracting beams are particularly interesting when high laser intensities are needed over longer distances. These beams are proper solutions to the wave equation when the transverse field profile is in the form of zero-order Bessel function.

The theoretical Bessel beams carry an infinite amount of energy. As a result, it is not possible to generate an ideal diffraction-free beam. Approximations are possible, however. Practically, one can generate quasi-Bessel beams, also called Bessel-like beams, which exhibit long line focal regions. Their depth of focus is much larger compared to beams of similar core sizes focused with a lens. Consequently, they retain high intensities over distances which are much longer compared to Gaussian beams of similar spot sizes.

Several approaches have been shown to reasonably approximate the Bessel beam profile, including double-slit with focusing lens, circular periodic gratings, tunable acoustic gradients, uniaxial electro-optic crystals with applied voltage and axicon focusing.

An axicon is a lens-like element made of glass, but in the shape of a cone. Axicon focusing method for producing quasi-Bessel beams is superior to other methods in terms of energy throughput. Consequently, quasi-Bessel beams are most commonly generated by a conical lens, or axicon, which is finding increasing use in many applications.

However, axicons present problems, which create difficulties in the using of quasi-Bessel beams.

A conventional axicon generates Bessel-like beams with a certain spatial frequency determined by the cone angle. If the properties of the Bessel beam need to be changed, a new axicon is required.

Moreover, due to manufacturing constraints, the tip of the axicon deviates from the ideal cone shape and becomes rather round. Axicons with smaller base angles, which are able to produce longer Bessel zones, are more prone to this defect, which biases the measurements.

Due to the defect mentioned above and manufacturing difficulties, axicon base angles smaller than ~0.5° are not practical to manufacture. This puts a limit on the longest depth of focus achievable for quasi-Bessel beams.

An object of the present invention is to provide an optical device which overcomes the problems of the axicon presented hereinabove.

In order to achieve this objective, according to the present invention, it is provided an optical device, comprising an axicon with a predetermined refractive index and with one of its terminal surfaces having a conical shape, and a second optical element axially aligned with the axicon, having a refractive index different from the axicon and a surface complementary in shape to, and in contact with, the axicon conical surface.

This optical device works as an axicon, but it can easily present a very small angle of deflection. It is possible, in this way, to obtain an optical device working as an axicon having a base angle of less than 0.5°, without the problem of neither round tip defects nor manufacturing limits.

Advantageously, the angle of deflection of a beam after passing through the optical device is variable by varying the refractive index of the said second optical element.

In this way, an optical device according to the invention is tunable and can replace a variety of regular axicons.

According to a preferred embodiment of the invention, the said second element is a liquid enclosed in a housing, closed at one end by the conical surface of the axicon and at the opposite end by a transparent wall.

The optical device according to the invention having such a liquid second element is very easy to obtain.

Preferentially, the said transparent wall is a flat glass window perpendicular to the axle of the optical device.

The use of this glass window with parallel faces has no effect on the output beam profile.

Advantageously, that said refractive index of the said second optical element is variable by changing the liquid.

In this way, it is very easy to adjust the optical device according to the invention.

According to an other advantageous characteristic of the invention, said refractive index of the said second optical element is adjustable by changing the temperature of the liquid.

Fine adjustment of the optical device according to the invention can be obtained without changing the liquid.

Preferentially the optical device comprises a heating / cooling device in order to adjust the temperature of said liquid.

Such a device allows a very easy adjustment of the optical device.

According to another advantageous embodiment of the invention, the said second element is a second solid axicon, composed of any suited material.

Preferentially, the second element is made by a polymer solidified in a housing closed at one end by the conical surface of the first axicon.

Advantageously, the housing enclosing the polymer is removed after the solidification of said polymer.

According to a preferred embodiment, the conical surface of the axicon is a convex conical surface.

Preferentially, the base angle of the conical surface is larger than 10°.

Indeed, axicons having large base angles are easier to manufacture, cheaper, and present a tip of better quality.

According to another possible embodiment, the conical surface of the axicon is a concave conical surface.

The present invention also concerns an optical element having the shape of an axicon, comprising a liquid held in a housing, closed at one end by a transparent conical surface and at the opposite end by a transparent wall.

The transparent conical surface is preferably the conical surface of a solid axicon. It can also be a transparent wall having a conical shape.

Other advantages of the invention will be readily appreciated as the same become better understood by reference to the following detailed description when considered in connection with the accompanying drawings, wherein:

- figure 1 is a perspective view of an axicon lens;
- figure 2 is a sectional view of an axicon lens;
- figure 3 is a sectional view of an optical device according to an embodiment of the invention;
- figure 4 is a graph showing the on-axis intensity profiles of a Gaussian beam after focusing through the optical device of figure 3 at temperature of 20°C;
- figure 5 is a graph showing the on-axis intensity profiles of a beam after focusing through a conventional axicon of base angle 0.5°;
- figure 6 is a graph showing the on-axis intensity profiles of a beam after focusing through the optical device of figure 3 at a temperature of 31°C;
- figure 7 is a graph showing measured current resulting from a plasma screening at different transverse positions, whereas the plasma was generated using a femtosecond laser passing an optical device according to the invention;
- figure 8 is a graph showing measured current resulting from a plasma screening created with a regular axicon, at different transverse positions using the same laser as in fig. 7;
- figure 9A to 9E are sectional views of various types of axicon lenses.

Axicon lenses, also called axicons, are lens-like optical components, commonly made of optically transparent materials like fused silica or borosilicate glass (also known as "BK7"), with a conical surface on one side. Axicons are notably used to transform laser beams into quasi-Bessel beams or to focus a collimated beam into a ring.

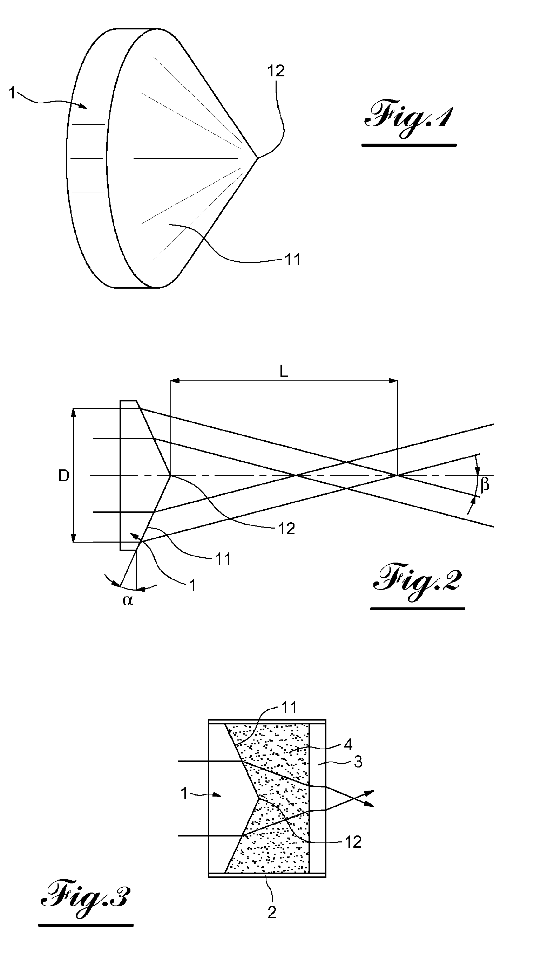

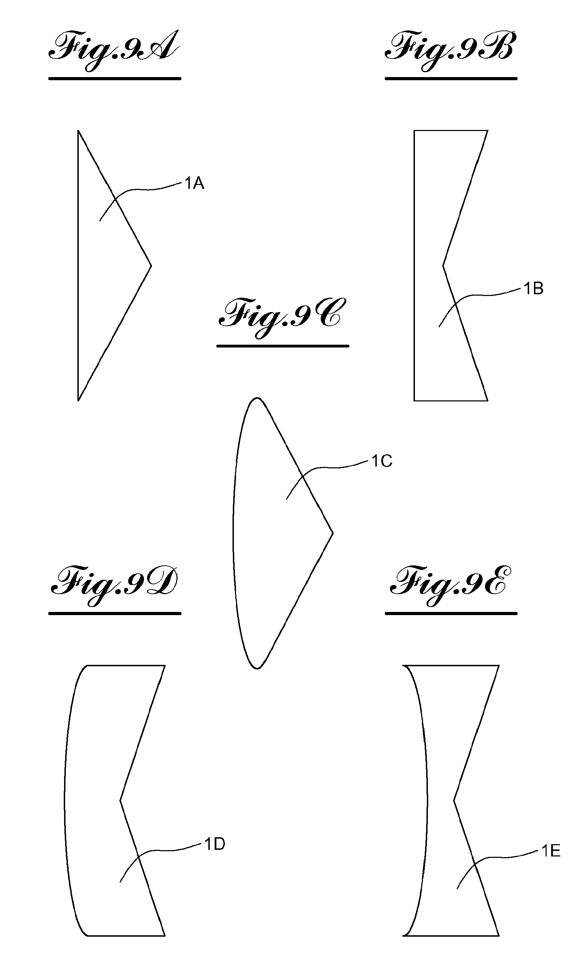

Figure 2 is a sectional view according to a symmetric plane of a regular axicon 1, such as shown on figure 1, which is of the plano-convex type (one flat surface and one convex conical surface). The conical surface of this axicon can be characterized by its base angle $\alpha$. This conical surface can be convex or concave. Figure 1, figure 9A and figure 9C represent examples of convex axicons. Figure 9B, figure 9D and figure 9E represent examples of concave axicons.

The half cone angle $\beta$, which is the angle of deflection of a beam coming into the axicon parallel to its symmetric axis, depends on the base angle $\alpha$ and on the refractive index. As has been explained above, it is advantageous to increase the depth of focus of the quasi-Bessel beam. This length can be increased by decreasing the half cone angle $\beta$.

Consequently, there is a need for axicons having a very small half cone angle $\beta$, but, as it is mentioned above, such axicons are difficult to manufacture and present important tip defects.

Figure 3 illustrate an optical device according to the invention, which overcomes these problems. This optical device comprises an axicon 1 similar to the axicon 1 of figure 1 and 2, and a second optical element assembled with axicon 1, which allows to modify the half cone angle $\beta$ of this axicon 1. By appropriately varying the refractive index of the second optical element, the optical device can be adjusted so that it works as an axicon having a very small half cone angle $\beta$, able to produce a quasi-Bessel Beam with a long depth of focus, although it comprises an axicon 1 which can be easily manufactured.

According to the embodiment of the invention represented by figure 3, the optical element added to the axicon 1 comprises a liquid 4 contained in a housing with cylindrical outer wall 2 axially aligned with the axicon, and closed at one end by the conical surface 11 of the axicon and at its other end by a flat glass window 3. The use of a glass window 3 with parallel faces has no effect on the output beam profile.

The liquid 4 constitute a "liquid axicon" having a concave conical surface corresponding to the convex conical surface 11 of the axicon 1. The optical device of the invention can consequently be considered as an assembly of two axicons.

The refractive index of the liquid axicon can be changed easily by changing the liquid 4.

The liquid 4 is a liquid with predetermined refractive index, called "index-matching liquid", chosen with a refractive index different from the refractive index of the axicon 1. Index-matching liquids are available over a broad range (1.3 ≤ $n$ ≤ 2.3) with small increments ($\Delta n$ = 0.002). Consequently, the half cone angle β can be adjusted precisely or even inverted by the choice of the index of this liquid 4.

The axicon 1 presents a large base angle α, such that the rounded region around the tip 12 of the conical surface 11 is minimal. Indeed, an axicon with a large base angle can be manufactured easily, cheaper and with a tip of better quality.

In the example represented in figure 2, the half cone angle β of the optical device must be smaller than the half cone angle β of the axicon 1, in order to produce a Bessel-like beam with a long depth of focus. Consequently, the refractive index of the liquid 4 used is smaller than that of the axicon 1 material. The refractive effect of the liquid is to decrease the transverse spatial phase gradient and consequently to reduce the effective cone angle of the resulting Bessel-like beam.

By choosing a liquid 4 with an index of refraction very close to that of the axicon glass very small cone angles can be achieved. Consequently, an optical device according to the invention can have the same effect as a conventional axicon with a very small base angle, which is very difficult to manufacture.

However, the index-matching liquid 4 can be changed in order to obtain any desired cone angle.

This result will be explained hereinafter, by theoretical considerations.

The propagation of beams after passing through an axicon is primarily determined by the half cone angle β, of the resulting wave vectors, as the transverse electric field profile is of the form $E(r) \propto J_0(kr\sin\beta)$, where $J_0$ is the zero-order Bessel function of the first kind, k is the wavenumber and r is the radial distance.

This angle β for the optical device of the invention can be calculated for a collimated input beam, using Snell's law:

$$\beta = \arcsin\left[ n_l \sin\left(\alpha_l - \alpha_a\right) \right]$$

where $n_l$ and $n_a$ are indices of refraction respectively for the liquid and axicon, $\alpha_a$ is the axicon base angle and $\alpha_l = \arcsin\left( n_a \sin\alpha_a / n_l \right)$ is the angle that the beam makes with the normal in liquid, at the axicon-liquid interface.

For small angles, this reduces to:

$$\beta = n_l \left(\alpha_l - \alpha_a\right)$$

The angle β can be adjusted by changing $n_l$, either by choosing a different liquid or by adjusting the temperature.

The change of index of refraction with the temperature is given by $n(T) = n_0 + \Delta T \times dn/dT$, where $\Delta T$ is the change in the temperature and $dn/dT$ is the temperature coefficient for the index. For index-matching liquids, $dn/dT$ is typically negative.

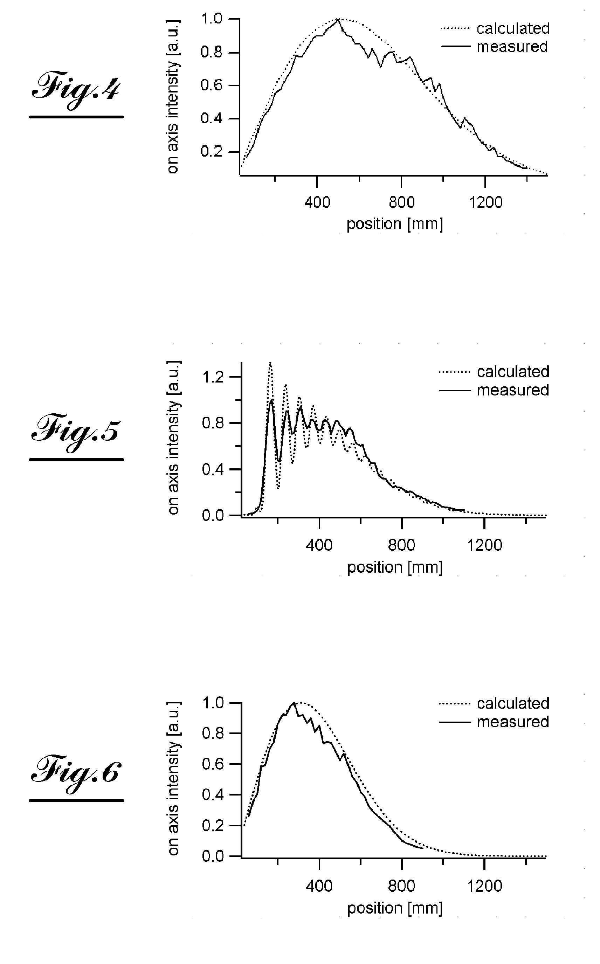

The above theoretical considerations are confirmed by tests which have been realised with a particular device according to figure 3, no limitative of the invention. The results of these tests are shown in figures 4 to 8.

In this particular device, the axicon 1 (50 mm diameter, made of fused silica, by Doric lenses) has a large (25°) base angle such that the rounded region of the tip is minimal. A cylindrical housing 2, of 50 mm diameter enclose index matching liquid between the axicon 1 and a glass window 3.

Index matching liquid 4 used (provided by Cargille Labs Inc., series AA) have refractive index of 1.45 at 589.3 nm wavelength at 25 °C, while the refractive index of fused silica forming the axicon 1 at the same wavelength is 1.4585. The effect of this liquid decreases the transverse spatial phase gradient and consequently reduces the effective half cone angle of the resulting quasi-Bessel beam.

The optical device is used with a He-Ne laser (at 633 nm wavelength) with a beam diameter expanded to 3.74 mm. When the beam passes through the optical device, the transverse intensity profile at different propagation distances is measured by a CCD camera (UEye 2210M). The measured transverse beam profile exhibits the expected Bessel-like form with many rings and no visible aberrations.

Using the transverse profiles, the change of the intensity of the center spot along the focal line (the evolution of the on axis intensity as a function of the propagation distance) can be also measured.

Figure 4 shows the measured on-axis intensity profiles after focusing through the optical device represented by figure 3 (at 20 °C). It can be seen that the choice of the liquid index very close to that of the axicon material allows the generation of a focal line longer than 1.3 m. To generate this cone angle (β=0.18°) and focal depth with a regular axicon lens in fused silica would require a ∼0.4° base angle.

As already written above, whereas a regular axicon with such a small base angle would be both complicated to manufacture and prone to introduce strong aberrations, an optical device according to the invention with such a small base angle is cost effective and very easy to fabricate. Index matching liquids are not expensive. Apart from the large angle axicon and glass window (both standard, non-expensive optical components) only a simple cylindrical housing and a proper mounting is required to assemble the system.

In order to compare the measured profile with the theoretical predictions, figure 4 also shows the calculated light electric field behind the optical device by numerically solving the Fresnel-Kirchhoff integral.

The input beam is taken to be a Gaussian with the measured diameter and with spatial phase introduced by the axicon: $\phi\left(r\right) \propto kr \tan\alpha_a \left(n_l - n_a\right)$ .

The index of refraction of the liquid at the laser wavelength is calculated using the measured indices at three different wavelengths (provided by the manufacturer) in the Hartmann dispersion formula. The index of the axicon material is calculated using the Sellmeier's formula. These indices are then adjusted for the temperature of the element using the expression given above (for the liquid $dn/dT$=-3.78$\times$10$^{-4}$/°$C$, for fused silica $dn/dT$=1.28$\times$10$^{-5}$/°$C$).

It can be seen in figure 4 that the measured on-axis intensity profile is very similar to the calculated on-axis intensity profiles. More importantly, one can note that there are no modulations on the intensity along the focal line as usually observed in the case of small angle regular axicons.

This advantage of the invention becomes clearer through comparison with a regular axicon. Figure 5 shows the measured on-axis intensity profile with a 0.5° base angle axicon (made of BK7 glass). The on-axis intensity in this case exhibits significant oscillations, resulting from the interference of the rays emerging from the lens-like tip and axicon-like surroundings.

Indeed, the round tip defect of the axicon causes significant aberrations in the intensity profile, introducing significant oscillations in the on-axis intensity. Axicons with smaller base angles, which are able to produce longer Bessel zones, are more prone to this defect.

Such aberrations become problematic for the applications of the element. For instance, when the physics behind the femtosecond laser driven plasma generation in air through axicon focusing is studied, it was predicted that nonlinear optical effects can generate modulations on the axial intensity. Studying this effect experimentally becomes challenging since the modulations from the non-ideal axicon affects the measurements.

Figure 5 also shows the calculated on-axis intensity profile, taking into account the blunt-tip profile.

Referring back to figure 4, one can note that there are no oscillations on the on-axis intensity as observed in the case of regular small angle axicons. Indeed, the rounded region of the tip is minimal for the large base angle used in the optical device. This rounded region is much smaller than the input beam size, so that its effect on the resulting beam is negligible.

Consequently, an optical device according to the invention provides efficient solution to the limitations of known axicons. It allows tunability, it can achieve very small cone angles, and it does not introduce aberrations due to non-perfect tip.

Furthermore, by adjusting the temperature of the liquid, its refractive index can be modified, and fine tuning of the optical device can be achieved.

In order to illustrate the tunability through temperature adjustment, figure 6 shows the measured and calculated on-axis intensity profiles for a temperature of the optical device of 31°C, other conditions being identical to figure 4. The adjustment of merely 11°C allow to increase the cone angle significantly (β = 0.28°) and to reduce the focal line to ∼0.8 m.

A "heating-cooling" system can be easily provided by fitting it around the housing of the optical element represented in figure 3.

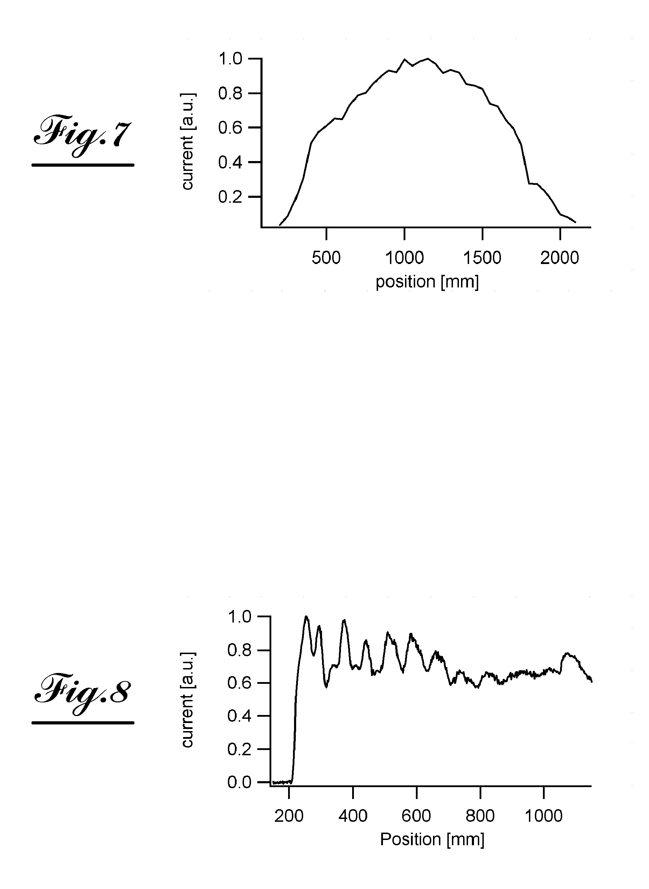

To test the feasibility of using the optical device according to the invention in nonlinear optical applications involving high peak power lasers, it has been tested with a Ti:Sapphire laser system (800 nm center wavelength, 50 fs pulse duration, 6 mJ pulse energy, 10 mm beam diameter). By focusing these pulses with the optical device, a plasma channel was generated in air (through multiphoton and tunnel ionization). The presence of plasma was detected using two electrodes with high (7 kV) potential difference, and measuring the current through the grounded electrode, resulting from the plasma screening. Figure 7 shows the measured current at different transverse positions. The overall length of the plasma channel reaches ∼2m, and is free of oscillations observed in similar experiments performed with a regular axicon, as shown by figure 8.

It was observed that when the input pulse energy is further increased (E>6mJ), the beam starts to form small-scale filaments within the liquid. This limitation can be addressed either by minimizing the liquid thickness or by increasing the input beam diameter.

In conclusion, an optical device according to the invention allows generating Bessel-like beams in tunable manner and with minimal aberrations, with line foci longer than those achieved with regular axicons, and the resulting on-axis intensity free from modulations.

A quasi-Bessel beam generated with an optical device according to the invention can be used in many applications, like optical coherence tomography, sorting of biological cells, or generation of plasma channels in transparent materials.

The interest of an optical device according to the invention is not limited to the generation of Bessel-like beams. On the contrary, it can be used in all the applications that implement a regular axicon. The optical device can have a different configuration, in order to fit with its application.

For example, it is possible to use any kind of liquid (even water) instead of the index matching liquid. However, the index matching liquids have the advantage that they provide very fine tunability.

It is also possible, for example, to use a polymer in its liquid phase instead of the index matching liquid and to solidify it afterwards. The temperature tunability will be compromised in this case. In this case, the housing containing the polymer can be removed after the solidification of the polymer.

It is also possible to use a second solid glass regular axicon, having a refractive index different from the refractive index of the first axicon, and a conical surface complementary to the conical surface of the first axicon. In this case, tunability is not possible without changing the material of one of the axicons.

The axicon used in the optical device can be of a different form. For example, figure 9A to 9E show a plano-convex axicon 1A, a plano-concave axicon 1B, a biconvex axicon 1C, a meniscus axicon 1D and a bi-concave axicon 1E.

In all configurations, the conical surface of the axicon can be immersed in a liquid to allow tunability and to avoid aberrations around the tip.

It is also possible to use a regular plano-convex axicon and immerse its conical face in a liquid with larger index of refraction than the axicon glass and generate an optical device having properties of an effective plano-concave axicon, or to use a regular plano-concave axicon and immerse its conical surface in a liquid with larger index of refraction than the axicon glass and generate an optical device having properties of an effective plano-convex axicon.

Of course, like every optical element, the optical device of the invention can be used in both directions. A beam can first pass through the solid axicon, and then pass through the second optical element, or the contrary.

The liquid optical element having the shape of an axicon can be made and used independently from the solid axicon. For example, liquid can be contained in a cylindrical housing closed at one end by a transparent flat wall and at the opposite end by a transparent conical wall. This liquid would act as an axicon, and/or the axicon refractive index could be changed easily by changing the liquid or changing the temperature of the liquid.

**Claims**

1. Optical device, comprising an axicon (1) with a predetermined refractive index and with one of its terminal surfaces having a conical shape (11),
   **characterized in that** it comprises a second optical element axially aligned with the axicon (1), having a refractive index different from the axicon (1) and a surface complementary in shape to, and in contact with, the axicon conical surface (11).

2. Optical device according to claim 1,
   **characterized in that** the angle of deflection of a beam after passing through the optical device is variable by varying the refractive index of the said second optical element.

3. Optical device according to claim 2,
   **characterized in that** the said second optical element is a liquid (4) enclosed in a housing, closed at one end by the conical surface (11) of the axicon (1) and at the opposite end by a transparent wall (3).

4. Optical device according to claim 3,
   **characterized in that** the said transparent wall (3) is a flat glass window perpendicular to the axle of the optical device.

5. Optical device according to any of claim 2 to 4, **characterized in that** said refractive index of the said second optical element is variable by changing the liquid (4).

6. Optical device according to any of claim 2 to 5, **characterized in that** said refractive index of the said second optical element is adjustable by changing the temperature of the liquid (4).

7. Optical device according to claim 6,
**characterized in that** it comprises a heating / cooling device in order to adjust the temperature of said liquid (4).

8. Optical device according to either of claim 1 or 2, **characterized in that** the said second optical element is a second solid axicon, composed of any suited material.

9. Optical device according to claim 8,
**characterized in that** the second element is made by a polymer solidified in a housing closed at one end by the conical surface of the first axicon (4).

10. Optical device according to claim 9,
**characterized in that** said housing enclosing the polymer is removed after the solidification of said polymer.

11. Optical device according to any of claim 1 to 10, **characterized in that** the conical surface (11) of the axicon (1) is a convex conical surface.

12. Optical device according to claim 11,
**characterized in that** the base angle of the conical surface (11) is larger than 10°.

13. Optical device according to any of claim 1 to 10, **characterized in that** the conical surface (11) of the axicon (1) is a concave conical surface.

14. Optical element having the shape of an axicon, comprising a liquid (4) held in a housing, closed at one end by a transparent conical surface (11) and at the opposite end by a transparent wall (3).

*Fig.1*

*Fig.2*

*Fig.3*

_Fig.4_

_Fig.5_

_Fig.6_

*Fig.7*

*Fig.8*

*Fig.9A*

1A

*Fig.9B*

1B

*Fig.9C*

1C

*Fig.9D*

1D

*Fig.9E*

1E

Europäisches
Patentamt
European
Patent Office
Office européen
des brevets

# EUROPEAN SEARCH REPORT

Application Number

EP 08 30 5879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 018400 A1 (FRAUNHOFER GES FORSCHUNG [DE]; INGENERIC GMBH [DE]; RWTH AACHEN [DE]) 30 October 2008 (2008-10-30) | 1,8, 11-13 | INV. G02B5/00 |
| A | * figures 1A-1B,2A-2B,4A-4B,5A-5B * | 2-7 | |
| Y | * figure 1A * ----- | 9,10 | |
| A | US 2007/183292 A1 (UJIIE MASAHIKO [JP] ET AL) 9 August 2007 (2007-08-09) * figure 7 * ----- | 2-7 | |
| Y | EP 0 689 119 A (SHARP KK [JP]) 27 December 1995 (1995-12-27) * column 5, line 47 - line 51 * ----- | 9,10 | |
| Y | US 2004/136069 A1 (LI YAJUN [US] ET AL) 15 July 2004 (2004-07-15) * paragraph [0032]; figure 5B * ----- | 9,10 | |
| | | | TECHNICAL FIELDS SEARCHED (IPC) |
| | | | G02B |

~~The present search report has been drawn up for all claims~~

| Place of search | Date of completion of the search | Examiner |
|---|---|---|
| Munich | 8 May 2009 | Michel, Alain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

Europäisches
Patentamt

European
Patent Office

Office européen
des brevets

Application Number

EP 08 30 5879

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-13

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-7,11-13

    Claim 2 relates to an optical element comprising an axicon and a second optical element axially aligned with the axicon according to claim 1, the latter being known from the disclosure of document DE 10 2007 018400 A1 (D1) which discloses an optical device comprising an axicon, one of its terminal surfaces being conical, (see e.g. figure 1A, axicon 5) said device comprising a second optical element axially aligned with the axicon and having a refractive index different from that of the axicon and a surface complementary in shape to, and in contact with, the conical surface of the axicon (in effect, axicon 5 is composed of three parts: the part on the side of the laser source 1 and the central part having the complementary cone as contact surface, the two parts having different indices or refraction since there is a refraction there between as shown by the figure). Claims 3-7 depend on claim 2. Claims 11-13 are either know from or obvious over the disclosure of D1.
    The underlying problem to be solved is how to adjust an axicon easily manufactured with a rather large half cone angle so that it works as an axicon that would have a very small half cone angle.
    The special feature is the refractive index of the second optical element being variable.
    ---

2. claims: 1,8-10

    Claim 9 relates to an an optical element comprising a first and a second axicon axially aligned with each other according to claim 8, the latter being known from the disclosure of document D1 (the second element - the central part of axicon 5 - is also an axicon (see e.g. figure 1A)). Claim 10 depends on claim 9.
    The underlying problem to be solved is how to match the refractive index to a fixed figure.
    The special feature is the second axicon being made of a solidified polymer.
    ---

3. claim: 14

    Independent claim 14 relates to an axicon-shaped optical element having a refractive index.
    The underlying problem to be solved is how to easily fine tune the refractive index.
    The special feature is the liquid comprised in the axicon.
    ---

**ANNEX TO THE EUROPEAN SEARCH REPORT
ON EUROPEAN PATENT APPLICATION NO.**

EP 08 30 5879

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2009

| Patent document cited in search report | | Publication date | Patent family member(s) | | Publication date |
|---|---|---|---|---|---|
| DE 102007018400 | A1 | 30-10-2008 | NONE | | |
| US 2007183292 | A1 | 09-08-2007 | JP 2007213708 A | | 23-08-2007 |
| EP 0689119 | A | 27-12-1995 | DE 69530541 D1 | | 05-06-2003 |
| | | | DE 69530541 T2 | | 18-03-2004 |
| | | | GB 2290627 A | | 03-01-1996 |
| | | | JP 3176256 B2 | | 11-06-2001 |
| | | | JP 8043850 A | | 16-02-1996 |
| | | | US 5729305 A | | 17-03-1998 |
| US 2004136069 | A1 | 15-07-2004 | NONE | | |

EPO FORM P0459

For more details about this annex : see Official Journal of the European Patent Office, No. 12/82